# EUROPÄISCHE PATENTSCHRIFT

(11) **EP 2 882 609 B1**
(45) Veröffentlichungstag und Bekanntmachung des Hinweises auf die Patenterteilung: **28.06.2017**
(21) Anmeldenummer: 13745438.5
(22) Anmeldetag: 07.08.2013
(51) Int. Cl.: B60N 2/28, B62B 7/06, B62B 7/14

(54) **ZUSATZEINRICHTUNG FÜR EINE BABYTRANSPORTSCHALE**
AUXILIARY EQUIPMENT FOR TRANSPORTING A BABY CARRIER
EQUIPEMENT AUXILIAIRE POUR TRANSPORTER UN PORTE-BÉBÉ

(30) Priorität: 07.08.2012 DE 102012015460
(43) Veröffentlichungstag der Anmeldung: 17.06.2015
(73) Patentinhaber: Straus, Martin, 74834 Elztal-Dallau (DE)
(72) Erfinder: Straus, Martin, 74834 Elztal-Dallau (DE)
(74) Vertreter: Mehler Achler
(86) Internationale Anmeldenummer: PCT/EP2013/066552
(87) Internationale Veröffentlichungsnummer: WO 2014/023767

(56) Entgegenhaltungen:
- EP-A1- 0 939 019
- EP-A1- 2 108 566
- US-A1- 2001 009 325
- US-A1- 2003 209 885

## Beschreibung

Die vorliegende Erfindung betrifft eine Zusatzeinrichtung zum erleichterten Transport einer Babytransportschale, gemäß dem Oberbegriff des Patentanspruchs 1.

Babytransportschalen sind auf dem Markt seit langem bekannt und zum Transport von Babies und Kleinkindern im PKW in vielen Ländern gesetzlich vorgeschrieben. Der hohe Sicherheitsstandard dieser Transporteinrichtungen erzeugt ein gewisses Grundgewicht, welches zusammen mit dem Baby für einen Tragetransport nicht unerheblich ist. Um das Transportieren bei längerem Tragen zu erleichtern, kann die Babytransportschale auf Kinderwagen oder ähnlichem montiert werden. Hierfür gibt es zahlreiche Adapter für die unterschiedlichsten Modelle von Kinderwagen oder eigene Fahrgestelle speziell für diese Baby-transportschalen.

Es sind jedoch keine Fahrgestelle oder Zusatzeinrichtungen auf dem Markt zu finden, welche den Kurztransport unterstützen und welche direkt mit der Babytransportschale verbunden sind, damit diese immer zur Verfügung stehen. Eine häufig anzutreffende Situation ist, dass das Kind mit der Babytransportschale nur eine kurze Distanz bewegt werden muss und es sich hierfür nicht lohnt, einen Kinderwagen oder ein Fahrgestell aufzubauen. Es würde jedoch eine große Erleichterung darstellen, das Gesamtgewicht nicht tragen zu müssen. Auch ist oft der Kinderwagen oder das Fahrgestell (beim Arzt oder im Supermarkt) nicht oder nur schlecht verstaubar oder diese sind zu schwer für einen kurzen Weg mit Treppen dazwischen. Auch ist den Frauen in den ersten drei bis vier Monaten nach der Entbindung das Tragen von schweren Gegenständen aus gesundheitlichen Gründen nicht gestattet. Aus diesen Gründen gibt es eine Vielzahl an Babyschalen, die durch Rollen beweglich sind.

In der Schrift DE 101 08 415 A1 wird ein Babysitz zur Verwendung als Transportsitz im Kraftfahrzeug und/oder zur Nutzung als Kinderwagen, bestehend aus einem, vorzugsweise schalenartigen, Aufnahmeelement für das Baby und einem Tragegriff zum händischen Transport des Babysitzes offenbart. Zwecks schneller und einfacher Umrüstung von der Betriebsart "Fahrersitz" in die Betriebsart "Kinderwagen" ist vorgesehen, dass am Aufnahmeelement mindestens ein Arm fest angeordnet ist. Alternativ ist vorgesehen, dass am Aufnahmeelement mindestens ein Arm schwenkbar angeordnet ist, der mit seinem einen Ende gelenkig mit dem Aufnahmeelement verbunden ist und an dessen anderen Ende mindestens ein Rad angeordnet ist.

Diese Vorrichtung hat jedoch den Nachteil, dass die Transportelemente an dem Babysitz fest und unlösbar angebracht sind. Somit muss bei einem auftretenden Schaden an den Transportelementen die komplette Babyschale erneuert werden. Für den Transport des Babysitzes über die Transportelemente muss zudem die Babyschale mit dem Tragegriff und dem Griffteil von dem Erdboden angehoben werden. Somit variiert der Abstand zwischen Babysitz und Erdboden je nach Körpergröße der transportierenden Person. Gerade bei großen Menschen kann dies jedoch problematisch werden, da bei einem unerwarteten Verlust des Griffteils während des Transports die Babyschale durch den vergrößerten Abstand zum Boden hart auf diesem aufschlägt. Somit besteht ein erhöhtes Verletzungsrisiko für das in dem Babysitz transportierten Kind.

Weiterhin ist aus der DE 295 18 371 U1 ein fahrbarer Baby- bzw. Kindersitz bekannt, der durch Ausklappen oder zusätzliches Anbringen von Achsen oder Einzelradaufhängungen mit sich daran befindlichen Rädern rollbar wird.

Diese Schrift beschreibt jedoch nur sehr allgemein einen Babysitz mit angebrachten Rollen, ohne konkrete Lösungsvorschläge zu liefern. Zudem wird eine Vorrichtung beschrieben, bei der die einzelnen Komponenten nach dem Zusammenbau ebenfalls fest und unlösbar miteinander verbunden sind, wodurch ebenfalls die gleichen Nachteile wie bei der voran beschriebenen DE 101 08 415 A1 entstehen.

Aus der Gebrauchsmusterschrift DE 20 2010 008 569 U1 ist eine Trageschale für eine Person, insbesondere für ein Kind, mit einem schalenförmigen Grundkörper, in den die Person hineingelegt oder gesetzt werden kann, bekannt, die dadurch gekennzeichnet ist, dass eine Rolleneinrichtung an der Tragschale zum Bewegen der Tragschale auf einer Unterlage angebracht ist.

Diese Vorrichtung hat jedoch den Nachteil, dass jeweils mindestens zwei Räder über eine gemeinsame Achse miteinander verbunden sind. Desweiteren wird auch in der DE 20 2010 008 569 U1 eine Vorrichtung beschrieben, bei der die Rolleneinrichtung und die Babyschale nach dem Zusammenbau fest und unlösbar miteinander verbunden sind, wodurch bei einem auftretenden Schaden an der Rolleneinrichtung die komplette Babyschale erneuert werden muss. Desweiteren muss für ein Verfahren der Babyschale mittels der Rolleneinrichtung ein Übertragungselement, beispielsweise ein Seil, ergriffen werden, welches schwer zugänglich unterhalb des Kopf- oder Fußendes der Babyschale angebracht ist.

Die EP 2 108 566 A1 offenbart ein Fahrgestell eines Kinderwagens, der einen feststehenden Griff sowie spezielle Verbindungselemente aufweist, die zur Befestigung der Babyschale mit entsprechenden Befestigungselementen an der Babyschale zusammenwirken.

Es ist daher Aufgabe der Erfindung, eine Zusatzeinrichtung zum Transport einer Babytransportschale bereitzustellen, die nachträglich an eine Babytransportschale auf einfache Weise lösbar anbringbar ist und einen einfachen und sicheren Transport der Transportschale ermöglicht.

Gelöst wird diese Aufgabe mit einer Zusatzeinrichtung zum Transport einer Babytransportschale gemäß dem unabhängigen Patentanspruch 1.

Die erste Ausführungsform der erfindungsgemäßen Zusatzeinrichtung als nachträglicher Anbau für eine Babytransportschale weist klappbare Laufrollen und verstellbare Griffe auf, die an der Babytransportschale anbringbar sind, wobei jede Laufrolle einzeln an der Transportschale anbringbar ist und jede Laufrolle eine Rollenhalterung aufweist, wobei die Rollenhalterung derart ausgebildet ist, dass sie in einer an der Babytransportschale bereits vorhandenen Aufnahmestelle für Adapter an oder in einem Tragegriffgelenk des Tragegriffs der Babytransportschale lösbar befestigbar ist.

Diese Zusatzeinrichtung hat den Vorteil, dass sie aus einzelnen Anbauteilen besteht, die sowohl universell, als auch sehr einfach und ohne Werkzeug an jede Babytransportschale montierbar sind. Desweiteren bedarf es an der Transportschale keinerlei Umbauarbeiten, da die bereits in die Babyschale integrierten Aufnahmestellen für Adapter an oder in einem Tragegriffgelenk des Tragegriffs der Babytransportschale für die Zusatzeinrichtung nutzbar sind. Somit ist die Zusatzeinrichtung nachträglich an jede Babytransportschale mit solchen Aufnahmestellen anbringbar.

Die Rollen sind dabei nicht durch eine gemeinsame Achse miteinander verbunden. Dies hat den Vorteil, dass das Anbringen der Zusatzeinrichtung wesentlich einfacher vollzogen werden kann und ein Austausch einzelner Komponenten ohne Schwierigkeiten möglich ist, wodurch Kosten und Material gespart werden. Ist die Zusatzeinrichtung erst einmal an der Transportschale angebracht, so ist mit wenigen Handgriffen, durch das Verstellen der Laufrollen und ein Herausziehen der verstellbaren Griffe, was einer Arbeitsposition der verstellbaren Griffe entspricht, die Babytransportschale zusammen mit dem Kind sicher und komfortabel durch eine Person zieh- oder schiebbar eingerichtet. Die Babyschale erhält mittels der Zusatzeinrichtung Funktionen wie ein "Koffertrolley".

Beim Transport der Babyschale mit montierter Zusatzeinrichtung, in beispielsweise einem PKW, sind die einzeln klappbaren Rollen umgeklappt und die verstellbaren Griffe wieder eingeschoben, wodurch platzraubende Störeffekte vermieden werden. Somit muss die Zusatzeinrichtung nicht wieder abgebaut werden, um den Standardgebrauch, wie auch die Sicherheit der Babytransportschale nicht zu beeinträchtigen. Sind die verstellbaren Griffe zusammengeschoben und haben folglich ihre geringste räumliche Ausdehnung, so stellt dies die Ruheposition der verstellbaren Griffe dar.

Standardmäßig sind an der Babytransportschale zwei Aufnahmestellen für Adapter vorhanden, die an oder in einem Tragegriffgelenk des Tragegriffs vorgesehen sind. Da der Tragegriff in der Regel im Bereich des Schwerpunktes der Babytransportschale angeordnet ist, können die Laufrollen in ihrer ausgeklappten Position im Wesentlichen in einem Bereich unter dem Schwerpunkt der Transportschale angeordnet werden.

Standardmäßig besitzt die Transporteinrichtung deshalb zwei Rollen. Beim Loslassen der verstellbaren Griffe kommt wenigstens ein Teil der Unterseite der Babytransportschale ohne große Kippbewegung direkt mit dem Erdboden oder Gehweg in Berührung, wodurch ein selbstständiges Losfahren der Transportschale nicht möglich ist oder die Babyschale sofort abgebremst wird. Sobald die Person den Griff loslässt, bleibt die gesamte Einrichtung, bestehend aus Zusatzeinrichtung und Babytransportschale, stehen.

In einer vorteilhaften Ausführungsform der Zusatzeinrichtung für eine Babytransportschale ist jede Laufrolle für die Einnahme einer Ruheposition und einer Arbeitsposition einzeln klappbar bzw. schwenkbar angeordnet.

Die Ruheposition und die Arbeitsposition bieten einen sicheren und einfachen Wechsel zwischen den verschiedenen Betriebsarten der Zusatzeinrichtung.

Zudem ermöglichen diese festgelegten Positionen eine optimale Funktionsweise der Zusatzeinrichtung entsprechend der wechselnden Anforderungen. In der Ruheposition weisen die klappbaren Laufrollen eine platzsparende Stellung auf, wodurch die Babyschale ohne Einschränkungen beispielsweise auf einem Autositz anbringbar ist. In der Arbeitsposition weisen die Laufrollen jedoch eine Stellung auf, die sowohl einen komfortablen, als auch sicheren Transport der Babyschale mit innenliegendem Kind ermöglicht.

In einer weiteren vorteilhaften Ausführungsform der Zusatzeinrichtung für Babytransportschalen sind die verstellbaren Griffe an einem an der Babyschale vorhandenen Tragegriff anbringbar.

Diese Ausführungsform bietet die Vorteile, dass die verstellbaren Griffe sehr einfach und ohne Umbauarbeiten der Babyschale an dieser befestigbar sind. Desweiteren wird durch die Montage der verstellbaren Griffe direkt an dem vorhandenen Griff der Transportschale die Funktionsweise der Schale in keiner Weise durch störende Vorrichtungen beeinträchtigt und die verstellbaren Griffe können sehr platzsparend auch in Ruheposition der Transportschale befestigt bleiben.

In einer weiteren vorteilhaften Ausführungsform der Zusatzeinrichtung sind die verstellbaren Griffe jeweils mittels wenigstens eines Aufnahmeelements an einem an der Babyschale vorhandenen Tragegriff anbringbar.

Dieses wenigstens eine Aufnahmeelement bietet den Vorteil, dass die verstellbaren Griffe sehr einfach und unkompliziert an dem Tragegriff der Babyschale befestigbar und von dem Tragegriff wieder lösbar sind. Dies ermöglicht einen schnellen Austausch der verstellbaren Griffe.

In einer weiteren vorteilhaften Ausführungsform der erfindungsgemäßen Zusatzeinrichtung sind die verstellbaren Griffe aus- und einfahrbar.

Aus- und einfahrbare Griffe bieten den Vorteil, dass diese während des Transports der Babytransportschale mit angeordneter Zusatzeinrichtung einfach und schnell platzsparend zusammengeschoben werden können, wodurch auftretende Störeffekte durch hervorstehende Griffe vermieden werden

In einer weiteren vorteilhaften Ausführungsform der Zusatzeinrichtung für Babytransportschalen weisen die verstellbaren Griffe jeweils wenigstens einen Teleskopauszug auf.

Teleskopauszüge bieten den Vorteil einer einfachen und stabilen Handhabung einer Verlängerungseinrichtung. Desweiteren können diese platzsparend an dem vorhandenen Griff der Babytransportschale angebracht werden.

In einer weiteren vorteilhaften Ausführungsform der Zusatzeinrichtung sind die verstellbaren Griffe im ausgefahrenen Zustand mittels wenigstens eines Griffelements verbindbar.

Das wenigstens eine Griffelement ist dabei vorzugsweise an jeweils dem radial von der Babyschale weggerichteten Ende der verstellbaren Griffe angeordnet. In dem ausgefahrenen Zustand der verstellbaren Griffe sind die einzelnen verstellbaren Griffe über dieses wenigstens eine Griffelement miteinander lösbar verbindbar. Vorzugsweise weist jedoch jeder verstellbare Griff ein Griffelement auf, die im ausgefahrenen Zustand der verstellbaren Griffe miteinander verbindbar sind.

Vorteilhaft an diesem wenigstens einen Griffelement ist die Möglichkeit, die Babytransportschale über die Zusatzeinrichtung und das Griffelement sehr komfortabel bewegen zu können. Desweiteren wird die voran beschriebene Funktionsvielfalt der verstellbaren Griffe keinerlei beeinträchtigt.

In einer weiteren vorteilhaften Ausführungsform der Zusatzeinrichtung ist die klappbare Laufrolle um eine Schwenkachse beweglich angeordnet und die Laufrolle weist eine zu der Schwenkachse parallele Rollenachse auf und in Arbeitsposition der Laufrolle schließt eine die Schwenkachse und die Rollenachse verbindende Gerade einen Öffnungswinkel α mit einer Seite einer durch die Schwenkachse verlaufenden vertikalen Ebene ein, wobei die Seite der Ebene zu einem Kopfteil der Babyschale abgewandt ist, die Laufrolle wenigstens teilweise über eine Unterseite der Babytransportschale hervorragt und dieser Öffnungswinkel größer 0° und kleiner gleich 30° ist.

Vorteilhaft an dieser Ausführungsform ist die sichere und stabile Position der Laufrollen in Arbeitsposition. Durch den Öffnungswinkel und das Gewicht der Babyschale mit Kind werden die Laufrollen in der Arbeitsposition gehalten, wodurch ein hohes Maß an Sicherheit und Stabilität beim Transport der Babyschale durch die Zusatzeinrichtung erreicht wird. Zusätzlich kann die Laufrolle in der Arbeitsposition arretiert werden.

Eine zweite Ausführungsform der erfindungsgemäßen Zusatzeinrichtung als nachträglicher Anbau für eine Babytransportschale weist klappbare Laufrollen und einen verstellbaren Griff auf, die an der Babytransportschale anbringbar sind, wobei jede Laufrolle einzeln an der Transportschale anbringbar ist und jede Laufrolle eine Rollenhalterung aufweist, wobei die Rollenhalterung derart ausgebildet ist, dass sie in einer an der Babytransportschale bereits vorhandenen Aufnahmestelle für Adapter lösbar befestigbar ist.

Diese zweite Ausführungsform der Zusatzeinrichtung unterscheidet sich von der ersten Ausführungsform dadurch, dass nur ein verstellbarer Griff vorgesehen ist.

Die Ausführungen zu den klappbaren Rollen gemäß der ersten Ausführungsform gelten in gleicher Weise auch für die klappbaren Rollen der zweiten Ausführungsform.

Die Verwendung lediglich eines verstellbaren Griffs ermöglicht eine zusätzliche Gewichtsreduktion der Zusatzeinrichtung, was gerade bei einem Transport der Babyschale mit angeordneter Zusatzeinrichtung vorteilhaft ist. Desweiteren ist ein Montageprozess der Zusatzeinrichtung an die Babyschale durch die Verwendung lediglich eines verstellbaren Griffs noch schneller und einfacher und ohne Werkzeug zu vollziehen.

In einer vorteilhaften Ausführungsform der zweiten Ausführungsform der Zusatzeinrichtung für Babytransportschalen ist jede Laufrolle in deren Ruheposition mittels Kraftschluss gehalten.

Diese Ausführungsform bietet den Vorteil, dass für den Verbleib der Laufrollen in der Ruheposition ganz einfach und schnell lediglich die Laufrollen in die Ruheposition geklappt werden müssen, wodurch keine weiteren Arbeitsschritte notwendig sind.

In einer weiteren vorteilhaften Ausführungsform der zweiten Ausführungsform der Zusatzeinrichtung für Babytransportschalen ist der einzelne verstellbare Griff an einem an der Babyschale vorhandenen Tragegriff anbringbar.

Diese Ausführungsform bietet die Vorteile, dass der verstellbare Griff sehr einfach und ohne Umbauarbeiten der Babyschale an dieser befestigbar ist. Desweiteren wird durch die Montage des verstellbaren Griffs direkt an dem vorhandenen Griff der Transportschale die Funktionsweise der Schale in keiner Weise durch störende Vorrichtungen beeinträchtigt und der verstellbare Griff kann sehr platzsparend auch in Ruheposition der Transportschale befestigt bleiben.

In einer weiteren vorteilhaften Ausführungsform der zweiten Ausführungsform der Zusatzeinrichtung ist der verstellbare Griff mittels wenigstens eines Aufnahmeelements an einem an der Babyschale vorhandenen Tragegriff anbringbar.

Dieses wenigstens eine Aufnahmeelement bietet den Vorteil, dass der verstellbare Griff sehr einfach und unkompliziert an dem Tragegriff der Babyschale befestigbar und von dem Tragegriff wieder lösbar ist. Dies ermöglicht einen schnellen Austausch des verstellbaren Griffs.

In einer weiteren vorteilhaften Ausführungsform der erfindungsgemäßen zweiten Ausführungsform der Zusatzeinrichtung ist der verstellbare Griff aus- und einfahrbar.

Ein aus- und einfahrbarer Griff bieten den Vorteil, dass dieser während des Transports der Babytransportschale mit angeordneter Zusatzeinrichtung einfach und schnell platzsparend zusammengeschoben werden kann, wodurch auftretende Störeffekte durch einen hervorstehenden Griff vermieden werden. Zudem kann der eine verstellbarer Griff beim Transport der Babyschale durch die Zusatzeinrichtung an die jeweilige Körpergröße der ziehenden, beziehungsweise schiebenden Person angepasst werden, wodurch ein erhöhter Transportkomfort erzielt wird.

In einer weiteren vorteilhaften Ausführungsform der zweiten Ausführungsform der Zusatzeinrichtung für Babytransportschalen weist der verstellbare Griff wenigstens einen Teleskopauszug auf.

Wenigstens ein Teleskopauszug bietet den Vorteil einer einfachen und stabilen Handhabung einer Verlängerungseinrichtung. Desweiteren kann dieser platzsparend an dem vorhandenen Griff der Babytransportschale angebracht werden.

In einer weiteren vorteilhaften Ausführungsform der zweiten Ausführungsform der Zusatzeinrichtung ist der verstellbare Griff in verschiedenen Positionen arretierbar angeordnet.

Der Vorteil dieser Ausführungsform besteht in der Feststellbarkeit der Länge des verstellbaren Griffs. Somit kann die Zusatzeinrichtung an jede Körpergröße der Person angepasst werden, die die Babyschale bewegt, wodurch ein Transport der Babytransportschale durch Ziehen oder Schieben ergonomisch und kraftschonend ermöglicht wird.

Weitere Merkmale und Ausführungsformen werden nachfolgend anhand der Figuren näher erläutert. Es zeigen:
- Figur 1a und 1b: eine kommerziell erhältliche Babytransportschale aus zwei verschiedenen Perspektiven a und b,
- Figur 1c: eine kommerziell erhältliche Babytransportschale mit Griff in Arbeitsposition,
- Figur 2: eine erste Ausführungsform der Zusatzeinrichtung mit Babytransportschale in Ruheposition,
- Figur 3: eine erste Ausführungsform der Zusatzeinrichtung mit Babytransportschale in Arbeitsposition,
- Figur 4: eine erste Ausführungsform der Zusatzeinrichtung mit Babytransportschale in Arbeitsposition während der Benutzung durch eine Person,
- Figur 5a und 5b: eine zweite Ausführungsform der Zusatzeinrichtung mit Babytransportschale in teilweiser Ruheposition,
- Figur 6: eine zweite Ausführungsform der Zusatzeinrichtung mit Babytransportschale in Arbeitsposition,
- Figur 7: eine Rollenhalterung der zweiten Ausführungsform der Zusatzeinrichtung.

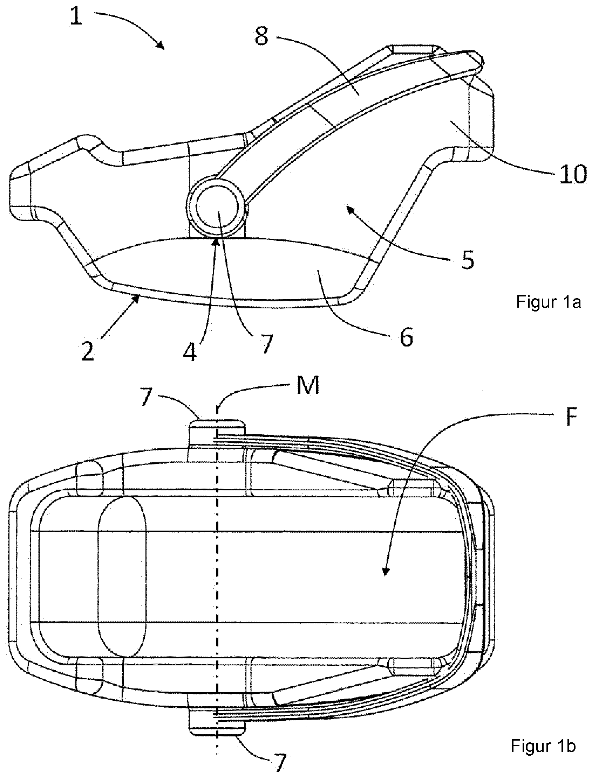

In den Figuren 1a und 1b ist jeweils eine schematische Zeichnung einer kommerziell erhältlichen Babytransportschale 1 dargestellt.

In der Figur 1a ist die Babytransportschale 1 in der Seitenansicht, folglich mit Blick auf die Seitenwand 5 dargestellt, wohingegen in Figur 1b die Babytransportschale 1 mit Blick von oben auf die Liegefläche F abgebildet ist. Die kommerzielle Babyschale 1 weist eine Schale 6, einen Tragegriff 8 sowie zwei Aufnahmestellen 4 für Adapter auf.

Der Griff 8 ist über ein Tragegriffgelenk 7 mit der Schale 6 verbunden und um eine Mittelachse M beweglich angeordnet. Direkt unterhalb dieser Mittelachse M sind an beiden Seitenwänden 5 der Babytransportschale 1 die Aufnahmestellen 4 für Adapter angeordnet, die innerhalb der Tragegriffgelenke 7 angeordnet sind und von der Unterseite 2 der Babytransportschale 1 zugänglich sind. Der Griff 8 befindet sich in den Figuren 1a und 1b jeweils in der Ruheposition. In der Ruheposition erstreckt sich der Griff von der Mittelachse M in Richtung Kopfteil 10 der Babytransportschale 1 und liegt an diesem an oder auf.

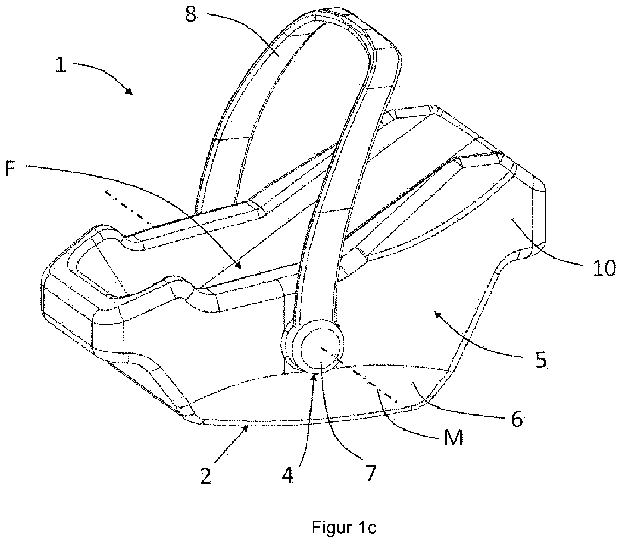

In der Figur 1c ist ebenfalls eine kommerziell erhältliche Babytransportschale, wie in den Figuren 1a und 1b, abgebildet. Hier befindet sich der Griff 8 jedoch nicht in Ruhe-, sondern in Arbeitsposition. In der Arbeitsposition liegt der Griff 8 nicht mehr auf dem Kopfteil 10 der Babyschale 1 auf, sondern ist über die Tragegriffgelenke 7 in eine zu der Unterseite 2 der Babytransportschale 1 nahezu senkrechten Position geschwenkt.

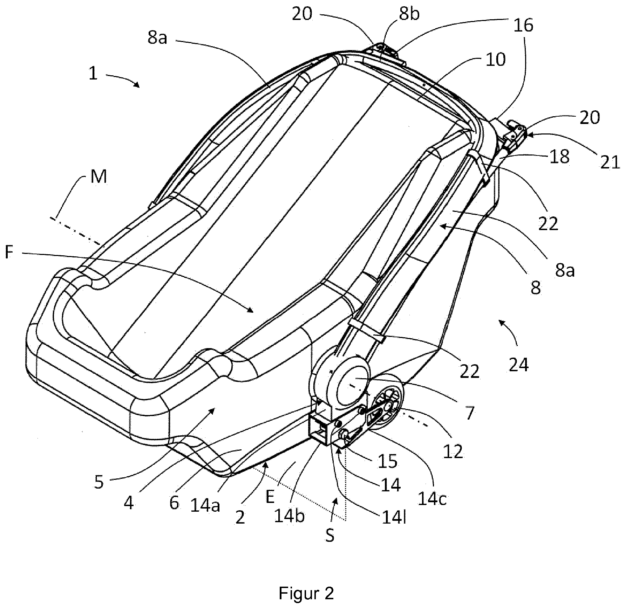

In der Figur 2 ist eine erste Ausführungsform der erfindungsgemäßen Zusatzeinrichtung 24 für Babytransportschalen 1 in der Ruheposition dargestellt. In den Aufnahmestellen 4 für die Adapter der Babytransportschale 1 sind jeweils Rollenhalterungen 14 angeordnet.

Jede Rollenhalterung 14 weist dabei drei Abschnitte 14a, 14b und 14c auf.

Der Abschnitt 14a ist in die Aufnahmestelle 4 der Transportschale 1 eingeschoben und ragt teilweise aus dieser hervor. Abschnitt 14b ist an Abschnitt 14a über zwei Befestigungselemente 14l angeordnet und bildet das Zwischenstück der Rollenhalterung 14. Abschnitt 14c ist über eine Schwenkachse 15 mit dem Abschnitt 14b verbunden. Dabei steht die Achse 15 parallel zur Mittelachse M der Babyschale und der Abschnitt 14c der Rollenhalterung 14 ist um diese Achse 15 schwenkbar angeordnet. Der Abschnitt 14c ist derart beweglich angeordnet, dass dieser im eingebauten Zustand an die Seitenwand 5 der Babytransportschale 1 und insbesondere an die Schale 6 in Richtung Kopfteil 10 schwenkbar ist.

Zusätzlich sind an einem freien Ende des Abschnitts 14c Laufrollen 12 angeordnet. Diese Laufrollen 12 liegen in deren Ruheposition der Seitenwand 5 der Schale 6 gegenüber und ragen vorzugsweise nicht unterhalb der Unterseite 2 der Babytransportschale 1 hervor. In der Figur 2 ist eine Ebene E eingezeichnet, die vertikal auf der Schwenkachse 15 steht. In der Ruheposition erstrecken sich die Laufrollen 12 mit den Rollenhalterabschnitten 14c senkrecht zu dieser Ebene E und weisen in Richtung Kopfteil 10 der Babytransportschale 1.

Der Griff 8 ist U-förmig mit zwei Schenkeln 8a und einem die Schenkel verbindenden Brückenabschnitt 8b ausgebildet.

An dem Griff 8 der Babytransportschale 1 ist mittels Aufnahmeelementen 22 an jedem Schenkel 8a des Griffs 8 wenigstens eine Teleskopstange 18 angeordnet. Vorzugsweise ist jede Teleskopstange 18 mittels zwei Aufnahmeelementen 22 befestigt. Die Teleskopstangen 18 erstrecken sich jeweils von dem Tragegriffgelenk 7 parallel zu den Schenkeln 8a und weisen an dem zum Tragegriffgelenk 7 entgegengesetzten Ende jeweils ein Griffelement 20 auf. Diese Griffelemente 20 bilden zusammen mit den Teleskopstangen 18 die verstellbaren Griffe 21. Die verstellbaren Griffe 21 bilden zusammen mit den Aufnahmeelementen 22 die Griffverlängerungseinrichtung 16. Diese Griffverlängerungseinrichtung 16 bildet wiederum zusammen mit den Laufrollen 12 sowie den Rollenhalterungen 14 die gesamte Zusatzeinrichtung 24.

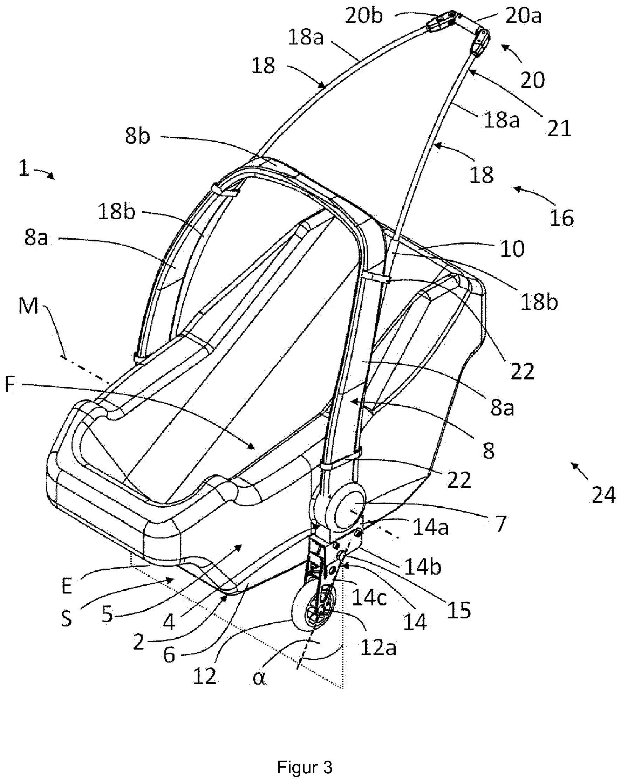

In der Figur 3 ist die erfindungsgemäße Zusatzeinrichtung 24 für Babytransportschalen 1 in der Arbeitsposition dargestellt. Die Laufrollen 12 und die Rollenhalterabschnitte 14c liegen nicht mehr der Seitenwand 5 der Babyschale 1 oder der Schale 6 gegenüber. Stattdessen wird von einer Verbindungsgeraden zwischen der Schwenkachse 15 und einer Rollenachse 12a und der Seite S der Ebene E, wobei die Ebene E vertikal auf der Achse 15 steht, ein Öffnungswinkel α eingeschlossen. Die Seite S ist die Seite der Ebene E, die von dem Kopfteil 10 der Babytransportschale 1 abgewandt ist. Weiterhin ragen die Laufrollen wenigstens teilweise über die Unterseite 2 der Babyschale hervor. Somit ist der Öffnungswinkel α sowohl von der Liegefläche F, als auch von dem Kopfteil 10 weggerichtet geöffnet. Der Öffnungswinkel α ist vorzugsweise größer 0° und kleiner gleich 30°.

Der Abschnitt 14a ist, wie bereits in der Figur 2 dargestellt, jeweils in die Aufnahmestelle 4 für die Adapter an den Seitenwänden 5 der Babytransportschale 1 eingeschoben.

In der Arbeitsposition der Zusatzeinrichtung 24 befinden sich die Teleskopstangen 18 ebenfalls in Arbeitsposition und sind wenigstens teilweise ausgezogen. Ein Teilabschnitt 18a ist jeweils aus einem Teilabschnitt 18b der Teleskopstange 18 herausgezogen und arretiert. Es können auch mehr als zwei Teilabschnitte in der Teleskopstange 18 vorhanden sein, jedoch wurde sich für eine bessere Darstellung stets auf eine zweiteilig ausgeführte Teleskopstange 18 beschränkt. Der Teilabschnitt 18b ist über Aufnahmeelemente 22 mit dem Griff 8 der Babytransportschale 1 verbunden. Dabei sind die Teleskopstangen 18 jeweils an den Schenkeln 8a des Griffs 8 angeordnet. Die Teleskopstangen 18 laufen in der Arbeitsposition konisch zusammen und sind gering in Richtung Kopfteil 10 der Babytransportschale 1 gekrümmt. Der Teilabschnitt 18a ist mit einem Ende mit dem Teilabschnitt 18b verbunden und an dem entgegengesetzten Ende weist jeder Teilabschnitt 18a jeweils ein Griffelement 20 auf. Diese Griffelemente 20 bestehen aus einer Greifeinheit 20a und einer Griffverbindungseinheit 20b und befinden sich in der Figur 3 ebenfalls in Arbeitsposition. In der Arbeitsposition sind die jeweiligen Greifeinheiten 20a der Teleskopstangen 18 miteinander verbunden. Somit weisen die Teleskopstangen 18 an der Griffverbindungseinheit 20b den geringsten Abstand zueinander auf.

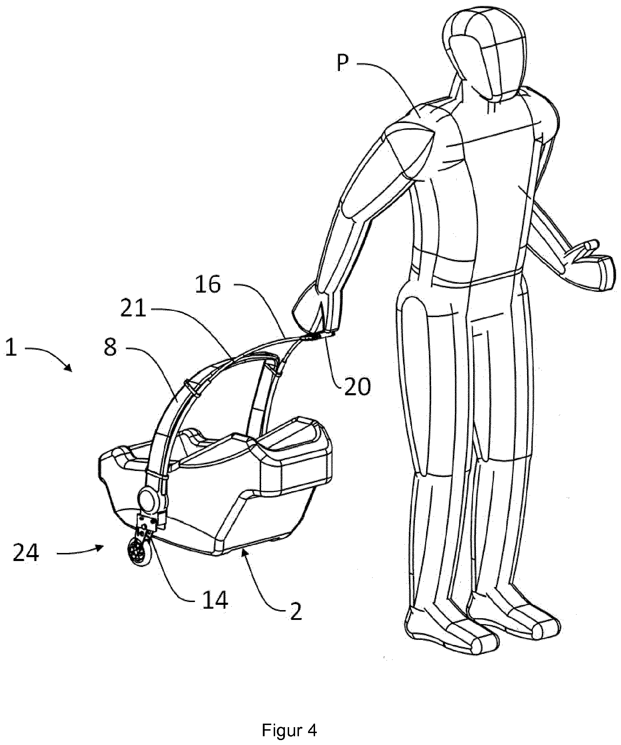

In der Figur 4 ist die in den Figuren 2 und 3 beschriebene Zusatzeinrichtung 24 für Babytransportschalen 1 in Arbeitsposition während der Benutzung durch eine Person P dargestellt. Die komplette Zusatzeinrichtung 24 sowie der Griff 8 der Transportschale 1 befinden sich in Arbeitsposition. Die verstellbaren Griffe 21 sind somit ausgezogen und die Rollenhalterungen 14 ausgeklappt, wobei die Laufrollen wenigstens teilweise über die Unterseite 2 der Babytransportschale 1 hinausragen. Um die Babytransportschale 1 mit der Zusatzeinrichtung 24 zu bewegen, greift die jeweilige Person P an das Griffelement 20, und zieht die komplette Transportschale 1 hinter sich her oder schiebt sie vor sich her.

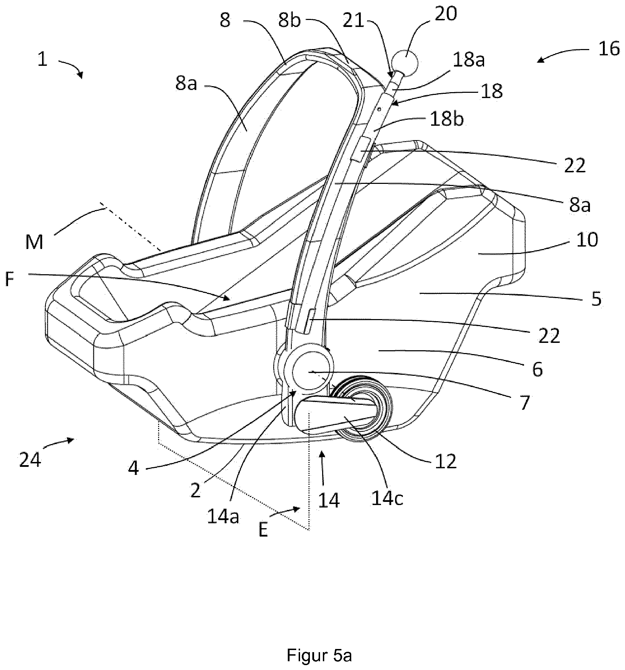

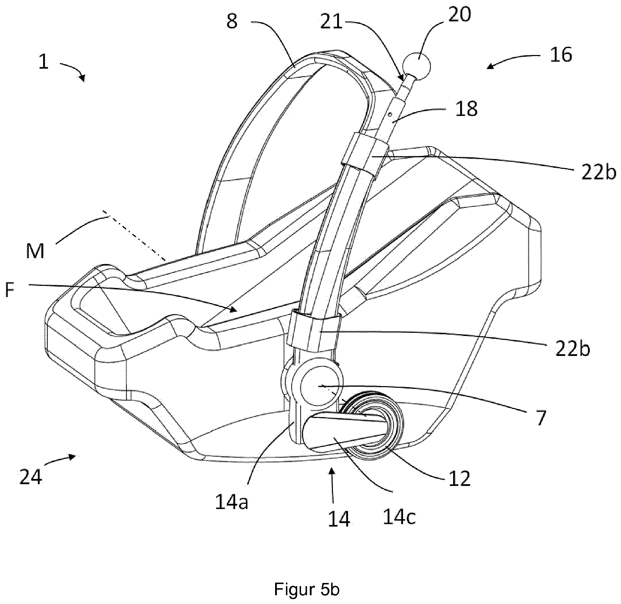

In den Figuren 5a und 5b ist eine zweite Ausführungsform der Zusatzeinrichtung 24 für Babytransportschalen 1 in Ruheposition dargestellt. Lediglich der Griff 8 der Babytransportschale befindet sich jeweils bereits in Arbeitsposition. In der Figur 5b ist die komplette zweite Ausführungsform der Zusatzeinrichtung abgebildet, wohingegen in der Figur 5a für eine bessere Veranschaulichung die Schutzelemente 22b für die Aufnahmeelemente 22 weggelassen wurden.

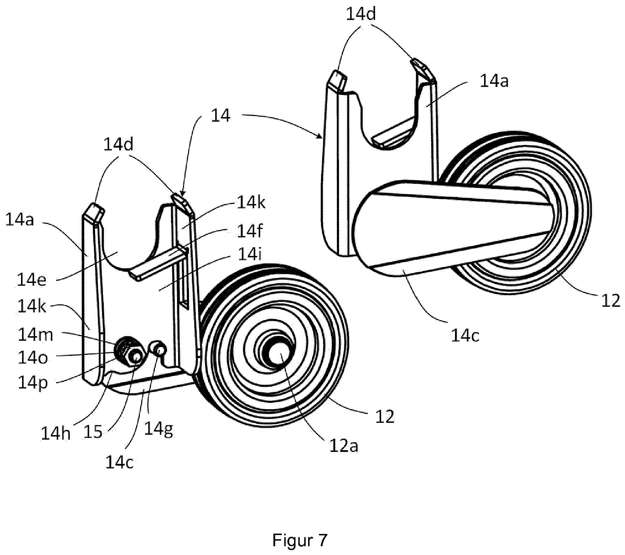

In der Figur 5a sind in die Aufnahmestellen 4 für Adapter der Transportschale 1, vergleichbar mit den vorherigen Figuren, Rollenhalterungen 14 eingeschoben und arretiert. Diese Rollenhalterungen 14 bestehen in dieser zweiten Ausführungsform aus zwei Abschnitten 14a und 14c. Der Abschnitt 14a ist wenigstens teilweise in die Aufnahmestelle 4 für Adapter eingeschoben und der Abschnitt 14c ist über eine in der Figur 5a nicht sichtbaren Achse 15 mit dem Abschnitt 14a schwenkbar verbunden. Die Achse 15 ist detailliert in Figur 7 dargestellt.

An dem freien Ende des Abschnitts 14c ist jeweils eine Laufrolle 12 angeordnet. In der Ruheposition der Laufrollen 12 sind die Abschnitte 14c, vergleichbar mit der Figur 2, senkrecht zu der Ebene E in Richtung des Kopfteils 10 der Transportschale 1 weisend angeordnet. Die Laufrollen 12 ragen in dieser Position vorzugsweise nicht unterhalb der Unterseite 2 der Transportschale 1 hervor und liegen jeweils einer Seitenwand 5 der Schale 6 der Babytransportschale 1 gegenüber.

Die Babytransportschale 1 weist einen verstellbaren Griff 21 auf, der an einem Schenkel 8a des Griffs 8 befestigt ist.

Der verstellbare Griff 21 ist mittels zwei Aufnahmeelementen 22 mit dem Griff 8 verbunden. Hierzu ist ein Aufnahmeelement 22 auf der dem Kopfteil 10 zugewandten Seite und ein Aufnahmeelement 22 auf der dem Kopfteil 10 abgewandten Seite des Griffs 8 angebracht. Die Aufnahmeelemente 22 sind derart S-förmig geformt, dass in einem halbkreisförmigen Abschnitt der S-Form der Griff 8 und in dem anderen halbkreisförmigen der S-Form jeweils die Teleskopstange 18 anbringbar ist. Die Teleskopstange 18 erstreckt sich von dem Tragegriffgelenk 7 parallel zu dem Schenkel 8a des Griffs 8. An dem dem Tragegriffgelenk 7 gegenüberliegendem Ende des verstellbaren Griffs 21 ist das Griffelement 20 angeordnet. Die Teleskopstange 18 enthält wenigstens zwei Teilabschnitte 18a und 18b, wobei wenigstens ein Teilabschnitt 18a in und aus dem Abschnitt 18b ein- und ausziehbar und arretierbar ist.

In der Figur 5b ist ebenfalls die zweite Ausführungsform der Zusatzeinrichtung 24 für Babytransportschalen 1, vergleichbar mit Figur 5a, in Ruheposition dargestellt. Jedoch sind um die S-förmigen Aufnahmeelemente 22 (nicht sichtbar) und die Teleskopstangen 18 laufende Schutzelemente 22b abgebildet. Diese Schutzelemente 22b der Aufnahmeelemente 22 können beispielsweise Klettverschlussvorrichtungen oder ähnliches sein und dienen dem Schutz und der Stabilisierung der Teleskopstangen 18 in den S-förmigen Aufnahmeelementen 22.

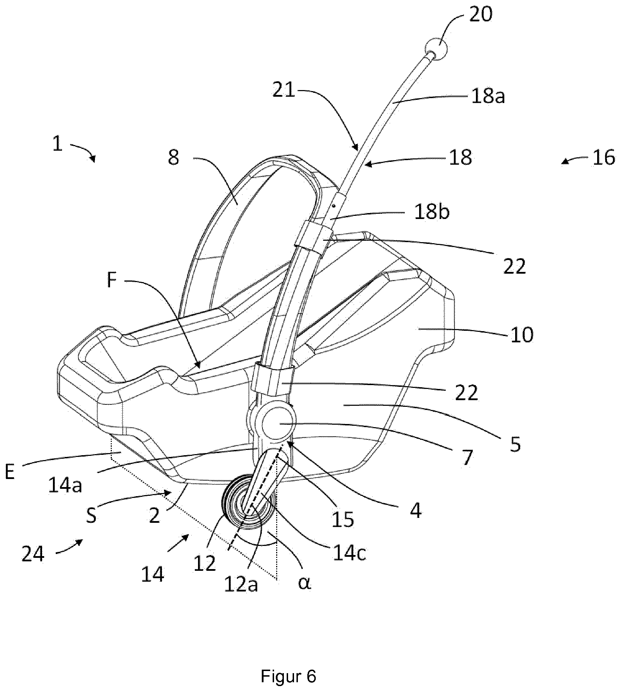

In der Figur 6 ist die zweite Ausführungsform der Zusatzeinrichtung 24 für Babytransportschalen 1 in Arbeitsposition dargestellt.

Der Rollenhalterabschnitt 14c ist um die in dieser Figur nicht sichtbaren Schwenkachse 15, welche in der Figur 7 detaillierter dargestellt ist, derart umgeklappt, dass von einer Verbindungsgeraden zwischen der Schwenkachse 15 und der Rollenachse 12a und der Seite S der Ebene E, wobei die Ebene E vertikal auf der Achse 15 steht, ein Öffnungswinkel α eingeschlossen wird. Die Seite S ist die Seite der Ebene E, die von dem Kopfteil 10 der Babytransportschale 1 abgewandt ist. Weiterhin ragen die Laufrollen 12 wenigstens teilweise über die Unterseite 2 der Babyschale hervor. Somit ist der Öffnungswinkel α sowohl von der Liegefläche F, als auch von dem Kopfteil 10 weggerichtet geöffnet. Der Öffnungswinkel α ist vorzugsweise größer 0° und kleiner gleich 30°.

Die Teleskopstange 18 ist ausgezogen, so dass wenigstens ein Teilabschnitt 18a aus dem Teilabschnitt 18b wenigstens teilweise herausgezogen und arretiert ist. Dabei ist die ausgezogene Teleskopstange 18 gering zu dem Kopfteil 10 der Transportschale 1 gekrümmt.

In der Figur 7 ist jeweils eine detaillierte Ansicht der Vorder- und Rückseite der Rollenhalterung 14 der zweiten Ausführungsform der Zusatzeinrichtung 24 für Babytransportschalen 1 in Ruheposition abgebildet.

Die Rollenhalterung weist zwei verschiedene Abschnitte 14a und 14c auf. Diese Abschnitte sind über eine Achse 15 derart miteinander verbunden, dass der Abschnitt 14c um diese Achse 15 schwenkbar ist. Für eine Einstellbarkeit der bei einer Schwenkbewegung zu überwindenden Reibung ist sowohl zwischen den Abschnitten 14a und 14c, als auch zwischen einer Mutter 14m und dem Abschnitt 14a jeweils eine Tellerfeder 14p angeordnet. Zusätzlich hierzu befindet sich zwischen der Tellerfeder 14p und der Mutter eine Unterlegscheibe 14o. Dies ermöglicht durch Verstellen der Mutter die auftretende Reibung zu steuern. Durch diesen auftretenden Reibschluss kann die Laufrolle in deren Ruheposition gehalten werden. Die Schwenkbewegung wird durch einen Anschlagspin 14g an dem Abschnitt 14c und eine Aussparung 14h an dem Abschnitt 14a, in den der Anschlagspin 14g, begrenzt.

An dem freien Ende des Rollenhalterabschnitts 14c ist eine Laufrolle 12 angeordnet. Diese ist ebenfalls drehbar um eine Rollenachse 12a gelagert. Der Abschnitt 14a weist eine Wand 14i und zwei Seitenwände 14k auf. Dabei sind die Seitenwände 14k jeweils senkrecht an dem Rand der Wand 14i angeordnet. Zur Verbindung der Rollenhalterung 14 mit der Aufnahmestelle für Adapter der Babytransportschale weist die Deckfläche 14i an einem der Achse 15 gegenüberliegendem freien Ende eine halbkreisförmige Aussparung 14e auf. Diese Aussparung 14e dient der Zentrierung der Rollenhalterung 14 durch einen entsprechend korrespondierenden Vorsprung oder Bolzen innerhalb der jeweiligen Aufnahmestelle 4 für Adapter an der Babytransportschale 1. Desweiteren ist an jeder Seitenfläche 14k an dem Ende, an dem die Deckfläche 14i die Aussparung 14e aufweist, jeweils ein Vorsprung 14d angeordnet. Diese Vorsprünge 14d sind in Richtung Achse 15 geneigt, um das Einführen des Rollenhalterabschnitts 14a in die Aufnahmestelle 4 für Adapter zu erleichtern. An wenigstens einer Seitenfläche 14k ist zusätzlich eine teilweise ausgeklinkte und in das Innere der Rollenhalterung eingeklappte Lasche 14f angeordnet. Diese Lasche 14f stellt einen Einrasthaken dar, der nach dem Einstecken der Rollenhalterung 14 in die Aufnahmestelle 4 für Adapter die Rollenhalterung in der Aufnahmestelle 4 gegen ein Herausfallen schützt.

### Bezugszeichenliste

- 1: Babytransportschale
- 2: Unterseite der Babytransportschale
- 4: Aufnahmestelle für Adapter
- 5: Seitenwand
- 6: Schale (Korpus einer Babytransportschale)
- 7: Tragegriffgelenk
- 8: Tragegriff der Babytransportschale in Ruheposition
- 8a: Schenkel
- 8b: Brückenabschnitt

- 10: Kopfteil der Babytransportschale
- 12: Laufrolle
- 12a: Rollenachse
- 14: Rollenhalterung
- 14a, b, c: Abschnitte der Rollenhalterung
- 14d: Vorsprung
- 14e: Aussparung
- 14f: Lasche
- 14g: Führungspin
- 14h: Führungsaussparung
- 14i: Deckfläche
- 14k: Seitenfläche
- 14l: Befestigungselemente
- 14m: Mutter
- 14o: Unterlegscheibe
- 14p: Tellerfeder
- 15: Achse
- 16: Griffverlängerungseinrichtung
- 18: Teleskopstange
- 19: Dreheinrichtung mit Arretierung

- 20: Griffelement
- 21: verstellbarer Griff
- 22: Aufnahmeelement
- 22b: Schutzelement
- 24: Zusatzeinrichtung
- 28: Verbindungseinheiten

- α: Öffnungswinkel
- E: Ebene
- F: Liegefläche
- M: gedachte Achse zwischen Aufnahmestellen
- P: Person
- S: Seite der Ebene E

## Patentansprüche

1. Zusatzeinrichtung (24) für eine Babytransportschale (1) mit einem Tragegriff (8) als nachträglicher
Anbau an die Babytransportschale (1),
**gekennzeichnet durch**
klappbare Laufrollen (12) und mindestens einen verstellbaren Griff (21), die an der Babytransportschale (1) anbringbar sind,
wobei jede Laufrolle (12) einzeln an der Babytransportschale (1) anbringbar ist und
jede Laufrolle (12) eine Rollenhalterung (14) aufweist,
wobei die Rollenhalterung (14) derart ausgebildet ist, dass sie in einer an der Babytransportschale (1) bereits vorhandenen Aufnahmestelle (4) für Adapter an oder in einem Tragegriffgelenk (7) des Tragegriffs (8) der Babytransportschale (1) lösbar befestigbar ist.

2. Zusatzeinrichtung (24) für eine Babytransportschale (1) nach Anspruch 1, **dadurch gekennzeichnet,**
**dass** jede Laufrolle (12) für die Einnahme einer Ruheposition und einer Arbeitsposition einzeln klappbar bzw. schwenkbar angeordnet ist.

3. Zusatzeinrichtung (24) für eine Babytransportschale (1) nach einem der Ansprüche 1 oder 2, **dadurch gekennzeichnet,**
**dass** die verstellbaren Griffe (21) in ausgefahrenem Zustand mittels wenigstens eines Griffelements (20) verbindbar sind.

4. Zusatzeinrichtung (24) für eine Babytransportschale (1) nach einem der Ansprüche 2 oder 3, **dadurch gekennzeichnet, dass** jede Laufrolle (12) in der Ruheposition mittels Kraftschluss gehalten ist.

5. Zusatzeinrichtung (24) für eine Babytransportschale (1) nach einem der Ansprüche 1 bis 4, **dadurch gekennzeichnet, dass** der oder die verstellbare/n Griff/e (21) an dem an der Babytransportschale (1) vorhandenen Tragegriff (8) anbringbar ist/sind.

6. Zusatzeinrichtung (24) für eine Babytransportschale (1) nach einem der Ansprüche 1 bis 5, **dadurch gekennzeichnet, dass** der oder die verstellbare/n Griff/e (21) mittels wenigstens eines Aufnahmeelements (22) an dem Tragegriff (8) der Babytransportschale (1) anbringbar ist/sind.

7. Zusatzeinrichtung (24) für eine Babytransportschale (1) nach einem der Ansprüche 1 bis 6, **dadurch gekennzeichnet, dass** der oder die verstellbare/n Griff/e (21) aus- und einfahrbar ist/sind.

8. Zusatzeinrichtung (24) für eine Babytransportschale (1) nach einem der Ansprüche 1 bis 7, **dadurch gekennzeichnet, dass** der oder die verstellbare/n Griff/e (21) wenigstens einen Teleskopauszug (18) aufweist/en.

9. Zusatzeinrichtung (24) für eine Babytransportschale (1) nach einem der Ansprüche 1 bis 8, **dadurch gekennzeichnet, dass** der verstellbare Griff (21) in verschiedenen Positionen arretierbar angeordnet ist.

10. Zusatzeinrichtung (24,) für eine Babytransportschale (1) nach einem der Ansprüche 2 bis 9, **dadurch gekennzeichnet, dass** eine klappbare Laufrolle (12) um eine Schwenkachse (15) beweglich angeordnet ist und dass die Laufrolle (12) eine zu der Schwenkachse parallele Rollenachse (12a) aufweist und dass in Arbeitsposition der Laufrolle (12) eine die Schwenkachse (15) und die Rollenachse (12a) verbindenden Geraden einen Öffnungswinkel (α) mit einer Seite S einer durch die Schwenkachse (15) verlaufenden vertikalen Ebene (E) einschließt, wobei die Seite S der Ebene E zu einem Kopfteil (10) der Babyschale (1) abgewandt ist, die Laufrolle wenigstens teilweise über eine Unterseite (2) der Babyschale hervorragt und der Öffnungswinkel (α) zwischen 0° und 30° beträgt.

## Claims

1. Auxiliary device (24) for a baby carrier (1) comprising a carry handle (8), in the form of a retrofitted attachment to the baby carrier (1), **characterised by** foldable rollers (12) and at least one adjustable handle (21) that can be attached to the baby carrier (1), it being possible to separately attach each roller (12) to the baby carrier (1), and each roller (12) comprising a roller mount (14), the roller mount (14) being designed such that it can be detachably fastened to or in a carry-handle joint (7) of the carry handle (8) of the baby carrier (1) at a receiving point (4) for adapters that is already provided on the baby carrier (1).

2. Auxiliary device (24) for a baby carrier (1) according to claim 1, **characterised in that** each roller (12) is arranged so as to be separately foldable or pivotable in order to occupy a rest position and an operating position.

3. Auxiliary device (24) for a baby carrier (1) according to either claim 1 or claim 2, **characterised in that**, when extended, the adjustable handles (21) can be connected by means of at least one handle element (20).

4. Auxiliary device (24) for a baby carrier (1) according to either claim 2 or claim 3, **characterised in that** each roller (12) is held in the rest position by means of a frictional fit.

5. Auxiliary device (24) for a baby carrier (1) according to any one of claims 1 to 4, **characterised in that** the adjustable handle(s) (21) can be attached to the carry handle (8) provided on the baby carrier (1).

6. Auxiliary device (24) for a baby carrier (1) according to any one of claims 1 to 5, **characterised in that** the adjustable handle(s) (21) can be attached to the carry handle (8) of the baby carrier (1) by means of at least one receiving element (22).

7. Auxiliary device (24) for a baby carrier (1) according to any one of claims 1 to 6, **characterised in that** the adjustable handle(s) (21) is/are extendable and retractable.

8. Auxiliary device (24) for a baby carrier (1) according to any one of claims 1 to 7, **characterised in that** the adjustable handle(s) (21) comprise(s) at least one telescopic extension (18).

9. Auxiliary device (24) for a baby carrier (1) according to any one of claims 1 to 8, **characterised in that** the adjustable handle (21) is arranged such that it can be locked in different positions.

10. Auxiliary device (24) for a baby carrier (1) according to any one of claims 2 to 9, **characterised in that** a foldable roller (12) is arranged so as to be movable about a pivot shaft (15), and **in that** the roller (12) comprises a roller shaft (12a) in parallel with the pivot shaft, and **in that**, in the operating position of the roller (12), a straight line connecting the pivot shaft (15) and the roller shaft (12a) encloses an opening angle (α) together with a side S of a vertical plane (E) extending through the pivot shaft (15), the side S of the plane E being remote from a head part (10) of the baby carrier (1), the roller projecting beyond an underside (2) of the baby carrier at least in part and the opening angle (α) being between 0° and 30°.

## Revendications

1. Dispositif supplémentaire (24) pour une coque de transport pour bébé (1) comprenant une poignée de transport (8) en tant que pièce montée a posteriori sur la coque de transport pour bébé (1),
**caractérisé par**
des roulettes (12) repliables et au moins une poignée ajustable (21), qui peuvent être appliquées sur la coque de transport pour bébé (1),
dans lequel chaque roulette (12) peut être appliquée individuellement sur la coque de transport pour bébé (1) et
chaque roulette (12) comprenant un élément de retenue de roulette (14),
dans lequel l'élément de retenue de roulette (14) est conçu de telle manière qu'il peut être fixé de manière amovible sur ou dans une articulation (7) de la poignée de transport (8) de la coque de transport pour bébé (1) à un endroit de réception (4) pour adaptateur déjà présent sur la coque de transport pour bébé (1).

2. Dispositif supplémentaire (24) pour une coque de transport pour bébé (1) selon la revendication 1,
**caractérisé**
**en ce que** chaque roulette (12) est agencée de manière à pouvoir se replier ou pivoter individuellement pour occuper une position de repos et une position de travail.

3. Dispositif supplémentaire (24) pour une coque de transport pour bébé (1) selon l'une quelconque des revendications 1 ou 2, **caractérisé**
**en ce que** les poignées (21) ajustables, une fois déployées, peuvent être reliées au moyen d'au moins un élément de poignée (20).

4. Dispositif supplémentaire (24) pour une coque de transport pour bébé (1) selon l'une quelconque des revendications 2 ou 3, **caractérisé**
**en ce que** chaque roulette (12) est retenue par force dans la position de repos.

5. Dispositif supplémentaire (24) pour une coque de transport pour bébé (1) selon l'une quelconque des revendications 1 à 4, **caractérisé**
**en ce que** la ou les poignée(s) ajustable(s) (21) peut/peuvent être appliquée(s) sur la poignée de transport (8) présente sur la coque de transport pour bébé (1).

6. Dispositif supplémentaire (24) pour une coque de transport pour bébé (1) selon l'une quelconque des revendications 1 à 5, **caractérisé**
**en ce que** la ou les poignée(s) ajustable(s) (21) peut/peuvent être appliquée(s) sur la poignée de transport (8) de la coque de transport pour bébé (1) au moyen d'au moins un élément de réception (22).

7. Dispositif supplémentaire (24) pour une coque de transport pour bébé (1) selon l'une quelconque des revendications 1 à 6, **caractérisé**
**en ce que** la ou les poignée(s) ajustable(s) (21) est/sont déployable(s) et escamotable(s).

8. Dispositif supplémentaire (24) pour une coque de transport pour bébé (1) selon l'une quelconque des revendications 1 à 7, **caractérisé**
**en ce que** la ou les poignée(s) ajustable(s) (21) comprend/comprennent au moins une coulisse télescopique (18).

9. Dispositif supplémentaire (24) pour une coque de transport pour bébé (1) selon l'une quelconque des revendications 1 à 8, **caractérisé**
**en ce que** la poignée ajustable (21) est agencée de manière à pouvoir être bloquée dans différentes positions.

10. Dispositif supplémentaire (24) pour une coque de transport pour bébé (1) selon l'une quelconque des revendications 2 à 9, **caractérisé**
**en ce qu'**une roulette repliable (12) est agencée de manière à pouvoir se déplacer autour d'un axe de pivotement (15) et **en ce que** la roulette (12) comprend un axe de roulette (12a) parallèle à l'axe de pivotement et **en ce que**, lorsque la roulette (12) se trouve dans la position de travail, une droite reliant l'axe de pivotement (15) et l'axe de roulette (12a) forme un angle d'ouverture (α) avec un côté S d'un plan (E) vertical s'étendant à travers l'axe de pivotement (15), dans lequel le côté S du plan E est opposé à une partie tête (10) de la coque pour bébé (1), la roulette fait saillie au moins en partie d'une face inférieure (2) de la coque pour bébé et l'angle d'ouverture (α) est compris entre 0° et 30°.
